## Europäisches Patentamt
## European Patent Office
## Office européen des brevets

(19)

(11) Publication number: **0 003 131**
**B1**

(12) **EUROPEAN PATENT SPECIFICATION**

(45) Date of publication of patent specification: **25.04.84**

(51) Int. Cl.³: **B 21 D 28/10, H 02 G 3/08**

(21) Application number: **79100067.2**

(22) Date of filing: **10.01.79**

(54) Pull-out blank in a sheet metal cabinet wall.

(30) Priority: **10.01.78 DK 112/78**

(43) Date of publication of application:
**25.07.79 Bulletin 79/15**

(45) Publication of the grant of the patent:
**25.04.84 Bulletin 84/17**

(84) Designated Contracting States:
**BE CH DE FR GB LU NL SE**

(56) References cited:
**CH - A - 294 778
FR - A - 367 466
FR - A - 757 581
FR - A - 1 332 164
FR - A - 1 569 255
FR - A - 2 140 886
GB - A - 1 263 074
US - A - 1 427 152
US - A - 1 643 958
US - A - 1 955 431
US - A - 1 975 979
US - A - 3 152 715
US - A - 3 187 932**

(73) Proprietor: **Aktieselskabet Laur. Knudsen Nordisk Elektricitets Selskab**
**Haraldsgade 53**
**DK-2100 Kopenhagen O (DK)**

(72) Inventor: **Just, Kristian**
**Melstedvej 3**
**DK-2770 Kastrup (DK)**

(74) Representative: **Vossius Vossius Tauchner Heunemann Rauh**
**Siebertstrasse 4 P.O. Box 86 07 67**
**D-8000 München 86 (DE)**

Courier Press, Leamington Spa, England.

Pull-out blank in a sheet metal cabinet wall

The invention provides a pull-out blank in a sheet metal cabinet wall in the form of a tear-out opener wherein two areas of sheet metal are separated from each other by tearing out an interjacent strip in the same material encircling an area of said wall.

Lids using this principle, wherein the material is provided with score lines along the longitudinal edges of the strip, are known from tin cans manufactured from tin plate. In previous designs the strip is provided with a grip or handle part at the place where it is designed to be pulled first.

An object of the present invention is to provide an opener of the said kind which works with sheet metal used for cabinet walls for electrical installations.

GB—A—1 263 074 relates to a plate of rigid material which may be used for a casing for holding an electrical switch. The plate is formed for easy perforation, for example for passage of electrically conducting wires. For this purpose the plate comprises a depression of about the same contour as the desired perforation on one side and a projecting spigot of smaller corresponding peripheral dimensions at the same site on the other side of the plate. A perforation is formed by striking the spigot with a hammer causing a plug of the material to be broken from the plate leaving an aperture in the plate. With this method, however, only perforations with a limited diameter or area can be formed, and the perforations cannot be formed "in situ".

The technical problem of the invention is to provide a pull-out blank in a sheet metal cabinet wall by which holes of any desired shape or diameter can be made in said wall. This problem is solved by means of a pull-out blank according to the claims.

According to one embodiment of the invention the pull-out blank is characterised in that the interjacent strip is provided with at least one score line across the longitudinal direction. Such an opener, which is not provided with a grip or handle part, can be opened by first striking the area of the strip adjacent to the transverse score line with a pointed tool, e.g. a chisel, thereby separating the strip from the surrounding sheet metal and providing an end which can be gripped with a set of pliers. Subsequently it is possible to tear out and wind up the strip from the other side of the plate. This pre-supposes that there is free access to both sides of the plate. A tear-out opener of this kind can, therefore, be used, for example, in steel cabinets for electrical installations which are designed with a series of pull-out blanks, enabling holes to be created for lead-in connections, depending on the application and mode of installation. This provides for a simple method of opening the holes necessary for a certain installation, the remaining holes staying closed and sealed if desired, with no parts protruding.

In another embodiment of the invention the sheet metal may be partly pre-cut or deformed to facilitate opening. The special advantage of this embodiment is that it makes it possible to produce a pull-out blank in thicker sheet metal: firstly, because such a material can be partly pre-cut with great accuracy and secondly, because it will be easy to tear off the remaining part of the material in the cut by means of pliers, even though the material is several times thicker than in existing tear-out openers in thin tin plate. The decisive factor is that the strip which is used can be held firmly by means of the pliers and, since the surroudning material is several times thicker than the material remaining in the cut, it provides good support for leverage of the pliers and at the same time ensures a perfect tear.

The invention will be further described in the following with reference to the accompanying drawing, in which:—

Fig. 1 shows an area of sheet metal provided with a circular pull-out blank according to the invention,

Fig. 2 shows a section along the line II—II in Fig. 1,

Fig. 3 shows a section along the line III—III in Fig. 1, and

Fig. 4 shows a similar section to that in Fig. 3, but according to another embodiment of the invention.

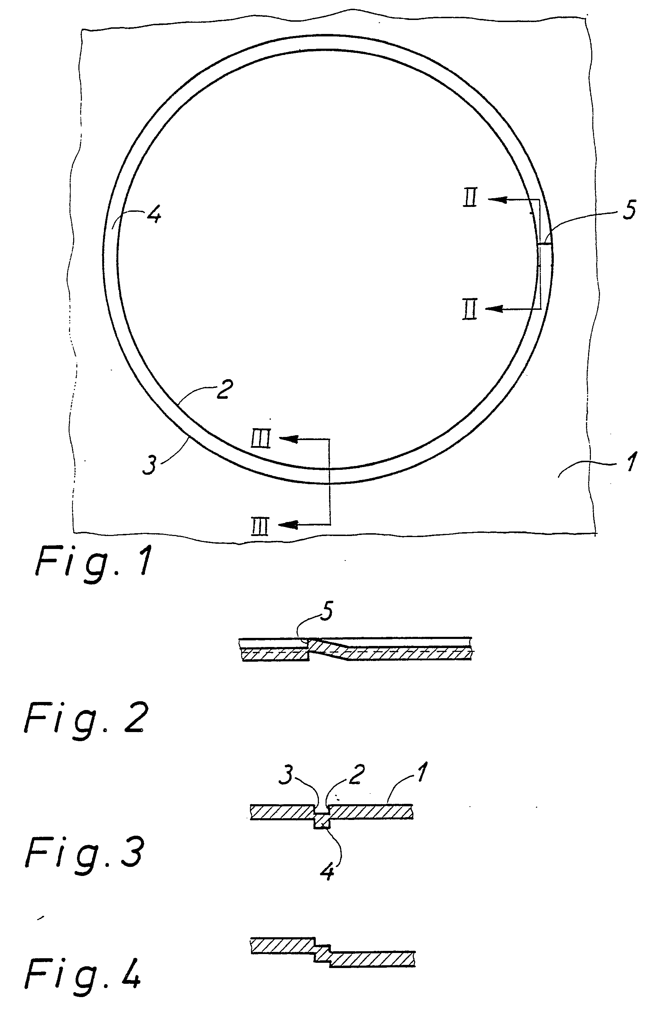

Fig. 1 shows an area of plate 1 made of sheet metal which constitutes part of the wall in a cabinet. In plate 1 there are two concentric circular pre-cut curves or longitudinal edges 2 and 3 which limit a tear-out strip 4. In the embodiment shown, the pre-cut curves 2 and 3 are formed by means of a partial cut or incomplete punching along the curves 2 and 3, as shown in Fig. 3. However, there is nothing to prevent the pre-cut curves from being obtained in any other well-known manner for making grooves in a material. The strip itself is provided with a score line along the line 5, as shown in Fig. 2.

The embodiment shown in Figs. 1, 2 and 3 works in the following way. If a circular opening is desired in plate 1 along the outer pre-cut curve, strip 4 should be cut at line 5 by means of a chisel, until one end of strip starts to protrude on the other side of the plate. Strip 4 can then be twisted and pulled out by means of pliers, until the whole of the circular plate is free.

As mentioned above, the invention is not limited with regard to score lines of a special design. A different example is shown in Fig. 4. It is obvious that the holes may have any shape suited to the purpose in question.

If, for instance, it is not a requirement that the walls of a cabinet be sealed when no blank has been pulled out, then the deformation along the line 5 made at the time of manufacture may be so large that the ends to be gripped by pliers already sufficiently protrude. By having these ends disposed on the inside of the cabinet wall, one may obtain the double advantage of only having to grip and pull in order to obtain an opening and of enabling aligned openings to be made in cabinets already mounted side by side by pulling out blanks from the respective insides of the adjacent cabinets. In other words, since access to the outside of the cabinets is not required, it is not necessary to once again remove a whole cabinet to provide aligned openings.

Pull-out blanks can, according to this invention, be made in steel plate which is more than 0.5 mm thick. The tear-out method of removing the pull-out blank works well for plates that are 1.5 mm thick. Naturally, the opener can also be used for sheet metal plates thinner than this.

## Claims

1. A pull-out blank in a sheet metal cabinet wall, said pull-out blank comprising two endless score lines (2, 3) in said wall that define between them a strip (4) that is removable by tearing it from said wall, the strip (4) encircling an area of said wall, there being at least one transverse score line (5) across the strip (4).

2. A pull-out blank in a sheet metal cabinet wall, said pull-out blank comprising two endless partially cut lines (2, 3) in said wall that define between them a strip (4) that is removable by tearing it from said wall, the strip (4) encircling an area of said wall, there being at least one transverse score line (5) across the strip (4).

3. A pull-out blank in a sheet metal cabinet wall, said pull-out blank comprising two endless lines (2, 3) that define between them a strip (4) encircling an area of said wall, the strip (4) being incompletely punched from said wall such that it can be subsequently torn therefrom, there being at least one transverse score line (5) across the strip (4).

4. A pull-out blank in a sheet metal cabinet wall, said pull-out blank comprising two endless score lines (2, 3) in said wall that define between them a strip (4) that is removable by tearing it from said wall, the strip (4) encircling an area of said wall, there being at least one line (5) across the strip (4) where the strip is so defomed that an end of the strip protrudes sufficiently as to be grippable by pliers.

5. A pull-out blank in a sheet metal cabinet wall, said pull-out blank comprising two endless partially cut lines (2, 3) in said wall that define between them a strip (4) that is removable by tearing it from said wall, the strip (4) encircling an area of said wall, there being at least one line (5) across the strip (4) where the strip is so deformed that an end of the strip protrudes sufficiently as to be grippable by pliers.

6. A pull-out blank in a sheet metal cabinet wall, said pull-out blank comprising two endless lines (2, 3) that define between them a strip (4) encircling an area of said wall, the strip (4) being incompletely punched from said wall such that it can be subsequently torn therefrom, there being at least one line (5) across the strip (4) where the strip is so deformed that an end of the strip protrudes sufficiently as to be grippable by pliers.

## Revendications

1. Opercule à arrachement dans une paroi d'armoire en tôle métallique, ledit opercule à arrachement comprenant deux lignes fermées entaillées (2, 3) dans ladite paroi, qui délimitent entre elles un ruban (4) que l'on peut enlever de la paroi par déchirement, le ruban (4) entourant une certaine surface de ladite paroi, et étant traversé par au moins une ligne entaillée transversale (5).

2. Opercule à arrachement dans une paroi d'armoire en tôle métallique, comprenant dans ladite paroi deux lignes fermées partiellement coupées (2, 3), qui délimitent entre elles un ruban (4) que l'on peut enlever de la paroi par déchirement, le ruban (4) entourant une certaine surface de ladite paroi, et étant traversé par au moins une ligne entaillée transversale (5).

3. Opercule à arrachement dans une paroi d'armoire en tôle métallique, comprenant deux lignes fermées (2, 3) qui délimitent entre elles un ruban (4) entourant une certaine surface de ladite paroi, le ruban (4) étant incomplètement poinçonné dans ladite paroi, de telle façon qu'il puisse ultérieurement en être détaché par déchirement, et ce ruban étant traversé par au moins une ligne entailleé transversale (5).

4. Opercule à arrachement dans une paroi d'armoire en tôle métallique, ledit opercule à arrachement comprenant dans ladite paroi deux lignes fermées entaillées (2, 3), qui délimitent entre elles un ruban (4) que l'on peut enlever de la paroi par déchirement, le ruban (4) entourant und certaine surface de ladite paroi et étant traversé par au moins une ligne (5), où il est déformé de façon telle qu'une extrémité du ruban fait suffisamment saillie pour pouvoir être saisie avec des tenailles.

5. Opercule à arrachement dans une paroi d'armoire en tôle métallique, comprenant dans ladite paroi deux lignes fermées partiellement coupées (2, 3) qui délimitent entre elles un ruban (4) que l'on peut enlever de la paroi par déchirement, le ruban (4) entourant une certaine surface de ladite paroi, et étant traversé par au moins une ligne (5), où il est déformé de façon telle qu'une extrémité du ruban fait suffisamment saillie pour pouvoir être saisie avec des tenailles.

6. Opercule à arrachement dans une paroi d'armoire en tôle métallique, comprenant deux lignes fermées (2, 3) qui délimitent entre elles un ruban (4) entourant une certaine surface de ladite paroi, le ruban (4) étant incomplètement poinçonné dans ladite paroi, de façon telle qu'il peut ultérieurement en être détaché par déchirement, et étant traversé par au moins une ligne (5), où il est déformé de façon telle qu'une extrémité du ruban fait suffisamment saillie pour pouvoir être saisie avec des tenailles.

**Patentansprüche**

1. Herausziehbarer Ausschnitt in einer Gehäusewand aus Metallblech, mit zwei endlosen Kerblinien (2, 3) in der Wand, zwischen denen ein Streifen (4) ausgebildet ist, der durch Herausreißen aus der Wand entfernbar ist und einen Bereich der Wand umgibt, wobei mindestens eine Kerblinie (5) quer über den Streifen (4) ausgebildet ist.

2. Herausziehbarer Ausschnitt in einer Gehäusewand aus Metallblech, mit zwei endlosen, teilweise durchtrennten Linien (2, 3) in der Wand, zwischen denen ein Streifen (4) ausgebildet ist, der durch Herausreißen aus der Wand entfernbar ist und einen Bereich der Wand umgibt, wobei mindestens eine Kerblinie (5) quer über den Streifen (4) ausgebildet ist.

3. Herausziehbarer Ausschnitt in einer Gehäusewand aus Metallblech, mit zwei endlosen Linien (2, 3), zwischen denen ein Streifen (4) ausgebildet ist, der einen Bereich der Wand umgibt und unvollständig aus der Wand gestanzt ist, so daß er anschließend daraus herausgerissen werden kann, wobei mindestens eine Kerblinie (5) quer über den Streifen (4) ausgebildet ist.

4. Herausziehbarer Ausschnitt in einer Gehäusewand aus Metallblech, mit zwei endlosen Kerblinien (2, 3) in der Wand, zwischen denen ein Streifen (4) ausgebildet ist, der durch Herausreißen aus der Wand entfernbar ist und einen Bereich der Wand umgibt, wobei mindestens eine Linie (5) über den Streifen (4) ausgebildet ist, an der der Streifen derartig deformiert ist, daß ein Ende des Streifens genügend vorragt, um durch eine Zange greifbar zu sein.

5. Herausziehbarer Ausschnitt in einer Gehäusewand aus Metallblech, mit zwei endlosen, teilweise durchtrennten Linien (2, 3) in der Wand, zwischen denen ein Streifen (4) ausgebildet ist, der durch Herausreißen aus der Wand entfernbar ist und einen Bereich der Wand umgibt, wobei mindestens eine Linie (5) über den Streifen (4) ausgebildet ist, an der der Streifen derartig deformiert ist, daß ein Ende des Streifens genügend vorragt, um durch eine Zange greifbar zu sein.

6. Herausziehbarer Ausschnitt in einer Gehäusewand aus Metallblech, mit zwei endlosen Linien (2, 3), zwischen denen ein Streifen (4) ausgebildet ist, der einen Bereich der Wand umgibt und unvollständig aus der Wand gestanzt ist, so daß er anschließend darous herausgerissen werden kann, wobei mindestens eine Linie (5) über den Streifen (4) ausgebildet ist, an der der Streifen derartig deformiert ist, daß ein Ende des Streifens genügend vorragt, um durch eine Zange greifbar zu sein.

Fig. 1

Fig. 2

Fig. 3

Fig. 4

1